# EUROPEAN PATENT SPECIFICATION

(11) **EP 2 322 869 B1**
(45) Date of publication and mention of the grant of the patent: **12.12.2018**
(21) Application number: 10190151.0
(22) Date of filing: 05.11.2010
(51) Int. Cl.: F24F 13/20, F24F 13/02, F16L 9/18, E04C 2/34, F24F 13/24

(54) **A double skin panel**
Doppelschichtige Platte
Panneau à double revêtement

(30) Priority: 12.11.2009 GB 0919759
(43) Date of publication of application: 18.05.2011
(73) Proprietor: NuAire Limited, Caerphilly Cardiff CF83 1NA (GB)
(72) Inventor: Biggs, Colin, Caerphilly, CF83 1NA (GB); Lyons, Martin, Caerphilly, CF83 1NA (GB); Lee, Robert, Caerphilly, CF83 1NA (GB); Flagg, Anthony, Caerphilly, CF83 1NA (GB)
(74) Representative: Jones, David Alan

(56) References cited:
- EP-A1- 1 278 023
- EP-A1- 1 491 827
- JP-A- 2007 139 279
- US-A- 1 791 255
- US-A- 6 056 021
- US-A1- 2009 200 801

## Description

The present invention relates to double skin panel and in particular to a double skin panel for use in HVAC plenums and enclosures.

Heating, ventilation and air conditioning (HVAC) systems are used in the built environment for assisting in the control of temperature and air quality. Such systems utilise panels for forming plenums to direct air throughout a building, or for enclosing machine components of the HVAC system such as fans, heaters and compressors. Panels for HVAC systems are therefore required to provide thermal and/or acoustic insulation, to maintain conditioned or heated air at the required temperature in the case of plenum or ducting construction, or to limit the emission of noise and/or heat from machine enclosures.

It is known to provide panels having thermally or acoustically insulating material attached to a single skin of metal. It is also known to provide double skin panels, which comprise inner and outer metal skins having a thermally or acoustically insulating material interposed therebetween. The inner and outer skins are typically joined by welding, riveting or other similar mechanical connectors. This means of connecting the panel skins is time consuming and labour intensive. In addition, the resulting joins leave the cut outer edges of the metal sheets physically exposed. Such edges may be sharp and include burrs, and therefore presents an injury hazard to installation engineers and other persons who may contact the panels.

US 2009/200801, US 6056021 and US 1791255 describe insulated panels are formed from folded metal sheets. Folded tabs sections of the metal panels are used to secure the panels together without the requirement for welding. Such folded panels may include sharp edges having burs from the cutting process. Where such edges are exposed they represent an injury risk.

It is therefore desirable to provide and improved panel which addresses the above describes problems and/or which provides improvements generally.

According to the present invention there is provided a structural panel as described in the accompanying claims.

In an embodiment of the invention there is provided a panel comprising a first wall section and a second wall section configured to be at least partially received within the first wall section. The first wall section comprises a first connection member and the second wall section comprises a second connection member. The first and second connection members are arranged such that they engage when the second wall section is inserted into the first wall section to hold the first and second wall sections together. In this way the panel may be formed by inserting the second wall section into the first wall section in a 'push-fit' arrangement, thereby simplifying assembly, and obviating the requirement for connection means such as welding or riveting.

The first and second wall sections are connected such that they define a pair of panel skins having a cavity therebetween.

The first wall section and second wall section are each entirely formed from a folded flat sheet material, thereby providing a simple panel construction.

The first and second connection members are integral with the first and second wall sections respectively and formed from the folded sheet material. In this way, the entire double skin panel construction may be formed from two flat metal sheets, which are simply folded to form the first and second wall sections.

The second connection member comprises at least one catch member and the first connection member comprises at least one recess configured to receive and engage the at least one catch member.

The first wall section comprises a pair of opposing side tab sections each folded to form a recess and the second wall section comprises a pair of corresponding opposing side tabs each folded to form a catch member. Therefore the connection means for the first and second wall sections are formed from the same folded sheets, thereby simplifying construction.

The first and second wall sections are folded such that when the second wall section is received within the first wall section none of the external edges of the first or the second wall sections are externally exposed. This advantageously prevents harm to persons handling the panel through contact with the potentially sharp and burred outer edges.

The first wall section includes a main wall portion and a plurality of side tabs for forming the side walls of the panel. Each side tab includes three folds, including a first fold forming an outer side wall portion oriented perpendicular to the main wall section, and a second fold forming an inner side wall portion oriented adjacent and parallel to the outer side wall portion. At least two of the side tabs further include a third fold arranged to locate the distal end of the side tab between the inner and outer side wall portions. This arrangement ensures that the outer cut edge of the sheet is enclosed within the panel away from contact between the inner and outer wall portions. In addition, the third folds form the recesses corresponding to the catches of the second wall section, the recesses being defined internally between the third fold and the main wall portion of the first wall section.

The second wall portion includes a main wall portion and at least two side tabs. Each of the side tabs include a first fold forming a side wall portion oriented perpendicular to the main wall section, and a second fold arranged to locate the distal end of the tab outside and substantially adjacent and parallel to the side wall portion to define the catch member. This arrangement ensures that the outer cut edge of the sheet is enclosed away from contact between the side wall portions of the first and second wall sections when received with the recess of the first walls section.

The panel may further comprise an acoustic and/or thermally insulating material interposed between the first and second wall sections.

The panel may be a structural and/or insulating panel for use in a HVAC system.

In another embodiment of the invention there is provided an enclosure formed from a plurality of panels as described above.

In another embodiment of the invention there is provided plenum or conduit formed from a plurality of panels as described above.

The present invention will now be described by way of example only with reference to the following illustrative figures in which:
Figure 1 shows a section view from above of a double skin panel according to an embodiment of the invention;
Figure 2 shows a sheet configured to be folded into a first wall section of the panel of figure 1 with the fold lines represented with dashed lines;
Figure 3 shows a flat sheet configured to be folded into a second wall section of the panel of figure 1 with the fold lines shown as dashed lines;
Figure 4 is an enlarged section view of one end of the panel of figure 1; and
Figure 5 is an enlarged section view of the panel of figure 1 including an internal insulating layer.

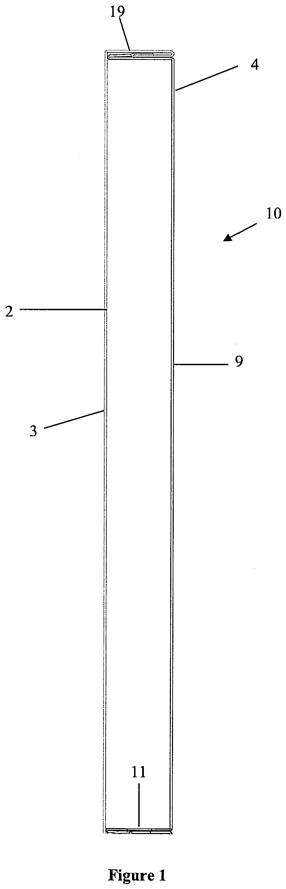

Referring to figure 1, a panel 10 is provided for usage in a HVAC system. The panel 10 may be used to construct a plenum or duct for channelling air, or to form an enclosure for housing HVAC machinery such as vans, heaters or turbines. The panel 10 comprises opposing side walls 3 and 9 forming inner and outer skins of the panel depending on its orientation in use, opposing end walls 11 and 19, and upper and lower walls (not shown) which define and entirely enclose a cavity 40.

The panel 10 comprises a first wall portion 2 and a second wall portion 4. The first and second wall portions 2, 4 are each entirely formed from single folded metal sheets.

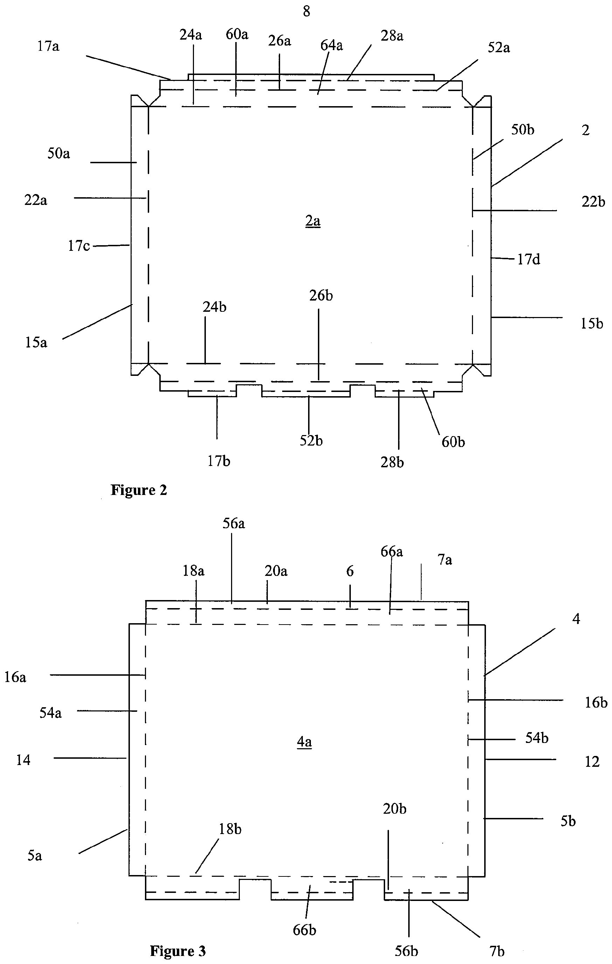

Figure 2 shows the first wall section 2 in flat sheet form. The first and second wall sections 2 and 4 are each formed from stamp cut flat sheets of metal, which is preferably Aluzinc, galvanised steel or a similar material. The flat sheet first wall section 2 comprises outer cut edges 17 a-d, a main wall portion 2a and series of tabs defined by fold lines. Side tabs 50a and 50b are defined by and folded about fold lines 22a and 22b, to form a pair of opposing side wall portions oriented substantially perpendicular to the main wall portion 2a. The first wall section 2 further comprises tabs 52a and 52b defined by and folded about fold lines 24a and 24b. When folded about fold lines 24a and 24b, the tabs 52a and 52b form opposing side wall portions 60a and 60b oriented substantially perpendicular to the main wall portion 2a.

Tabs 52a and 52b are then folded inwardly back on themselves about the fold lines 26a and 26b, to form inner side wall portions 62a and 62b. The distal ends 64a and 64b of each tab 52a and 52b are further folded inwardly on themselves about fold lines 28a and 28b, such that they are interposed between the inner side wall portions 62a and 62b and outer side wall portions 60a and 60b respectively.

Figure 3 shows the second wall section 4 in flat sheet form. The flat sheet second wall section 4 includes cut outer edge portions 7 a-d, a main wall portion 4a and a series of tabs defined by fold lines. Side tabs 54a and 54b are defined by and folded about fold lines 16a and 16b, to form a pair of opposing side wall sections oriented substantially perpendicular to the main wall portion 4a. The second wall section 4 further comprises tabs 56a and 56b defined by and folded about fold lines 18a and 18b, which form opposing side wall portions 66a and 66b oriented substantially perpendicular to the main wall portion 2a when folded about fold lines 18a and 18b. The distal ends 68a and 68b of the side tabs 56a and 56b are folded outwardly on themselves about fold lines 20a and 20b such that they are substantially parallel and perpendicular to the side wall portions 66a and 66b.

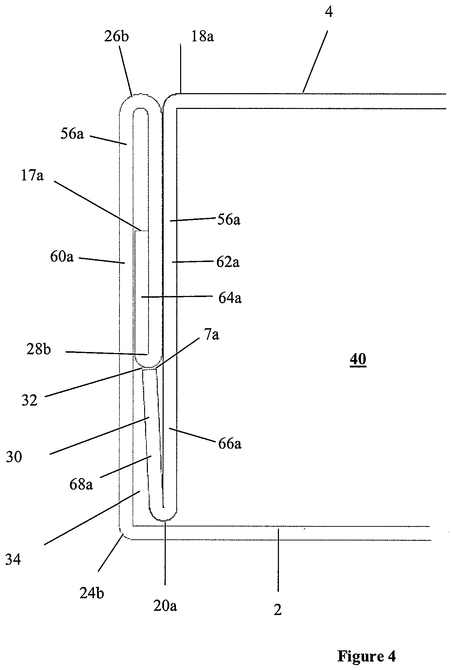

As can be seen from figure 4, the outwardly projecting distal end 68a of tab 56a (and similarly tab 56b) defines a catch member 30. Meanwhile the distal end of the tab 54a (similarly 54b) is folded back on itself to define a recess 34 between the folded tip 32 defined by the fold 28b and the inner surface of the main wall portion 2a.

To form the panel 10, the second wall section 4 is inserted into the first wall section 2 such that the main wall portions 2a and 4a, which define the outer skins of the panel, are spaced by the cavity 40. As the wall section 4 is inserted into the first section 2, the outer cut edge catch 30 engages the inner side wall 62a. This causes side wall 66a to bend inwardly about fold 18a to allow insertion of the second wall section 4. As a second wall section 4 is further inserted, the catch 30 aligns with the recess 34, and the resilience of the side wall portion 64a, which urges the catch member 30 outwardly when the side wall portion 64a is bent inwardly, causes the catch member 30 to move into the recess 34.

In this position, the catch member 30 engages with the recess 34, and specifically the distal end 7a engages with the curved edge 32 to secure and hold the catch 30 within the recess 34. As such, the second wall portion 4 is held within the first wall portion 2 by the engagement of the catch member 30 and the recess 34 in a push-fit arrangement.

Once secured in position within the first wall section 2, the cut edge 7a of the second wall portion 4 is enclosed between the side wall portion 66a of the second wall section 4 and the outer side wall portion 60a of the first wall section 2. Similarly, the cut edge 17a of the first wall portion 2 is concealed within the folded arrangement of the tab 52a between the inner side wall portion 62a and the outer side wall portion 60a. As such, the cut edges 17a and 7a (and similarly edges 17b and 7b), which may be sharp and include burs from the cutting process, are enclosed, thereby preventing contact by and therefore harm to persons handling the panel 10. Instead the only exposed edges of the first wall portion 2 are curved folded edges 24b, and 26b and similarly the only exposed edge of second wall portion 4 is curved folded edge 18a, and internally curved edge 20a.

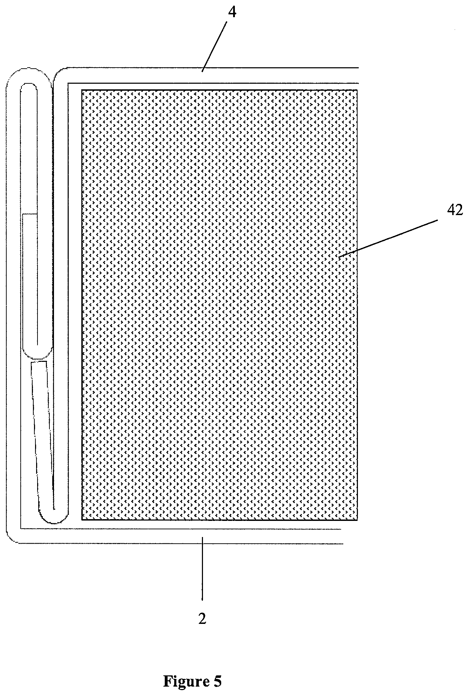

In a further embodiment shown in figure 5, a thermal and/or insulating material 42 may be provided as an additional layer within the void 40 such that it is interposed between the first wall section 2 and the second wall section 4. The insulating material 42 may be used to improve the thermal and/or acoustic insulating properties of the panel 10.

The present invention therefore provides a double skin panel 10 formed by a simple folded flat sheet construction, which enables quick and low cost manufacture. In addition, the folded arrangement including a catch member and corresponding recess allows a simple push-fit connection of the first and second wall portions 2 and 4, thereby obviating the requirement for riveting, welding or other labour intensive and costly means of connection. The panel 10 further advantageously provides a folded tab arrangement which conceals and obscures the sharp cut edges of the metal sheets from which the first wall section 2 and second wall section 4 are formed, thereby making the panels safer to handle.

It will be appreciated that in further embodiments various modifications may be made to the specific arrangements described above and generally. For example, while the panels are described as flat sheet panels, such is not essential and the invention may be applied to the construction of panels of varying shapes and configurations. Furthermore, while the panels are described as being formed from sheet metal, they may alternatively be formed from plastic, or any suitable sheet material. Furthermore, while the first wall section is described as including a recess for receiving the catch of the second wall section, this arrangement may be reversed with the first wall section including an inwardly facing catch which is received within a corresponding outwardly facing recess formed by the second wall section.

## Claims

1. A panel comprising:
a first wall section (2); and
a second wall section (4) configured to be at least partially received within the first wall section (2), the first wall section (2) and second wall section (4) being each formed from a folded sheet material;
**characterised in that**:
the first wall section (2) comprises a main wall portion (2a) and first tab sections (52) each including a first fold (24) forming an outer side wall portion (60) oriented perpendicular to the main wall section (2a), a second fold (2b) forming an inner side wall portion (62) oriented adjacent and parallel to the outer side wall portion (60), and a third fold (28) arranged to locate the distal end (64) of the side tab between the inner (62) and outer (64) side wall portions with a recess (34) being defined between the third fold (28) and the main wall portion (2a), and the second wall section (4) comprises second tab sections each folded to form catch members configured to be received within the corresponding recesses (34) of the first wall section (2) arranged such that they engage when the second wall section (4) is inserted into the first wall section (2) to hold the first and second wall sections (2,4) together the first and second tab sections being integral with the first and second wall sections (2,4) respectively and formed from the same folded sheet material with the first and second wall sections (2,4) being folded such that when the second wall section (4) is received within the first wall section (2) none of the external edges of the first or the second wall sections (2,4) are externally exposed.

2. The panel of claim 1 wherein the second wall section (4) includes a main wall portion (4a) and the second tab sections each include a first fold forming (18) a side wall portion (66) oriented perpendicular to the main wall section (4a), a second fold (20) arranged to locate the distal end (30) of the tab substantially adjacent and parallel to the side wall section (66) to define the catch member.

3. The panel of any preceding claim wherein the first and second wall sections (2,4) are configured such that they define a cavity therebetween.

4. The panel of any preceding claim further comprising an acoustic and/or thermally insulating material interposed between the first and second wall sections (2,4).

5. The panel of any preceding claim wherein the panel is a structural and/or insulating panel for use in a HVAC system.

6. An enclosure formed from a plurality of panels according to any preceding claim.

7. A plenum or conduit formed from a plurality of panels according to any preceding claim.

## Patentansprüche

1. Platte, umfassend:
einen ersten Wandabschnitt (2); und
einen zweiten Wandabschnitt (4), der zur zumindest teilweisen Aufnahme in dem ersten Wandabschnitt (2) ausgebildet ist, wobei der erste Wandabschnitt (2) und der zweite Wandabschnitt (4) jeweils aus einem gefalteten flächigen Material gebildet sind;
**dadurch gekennzeichnet, dass**
der erste Wandabschnitt (2) einen Hauptwandteil (2a) und erste Laschenabschnitte (52) umfasst, die jeweils eine erste Falte (24), die einen senkrecht zu dem Hauptwandabschnitt (2a) ausgerichteten Außenseitenwandteil (60) bildet, eine zweite Falte (2b), die einen neben und parallel zu dem Außenseitenwandteil (60) ausgerichteten Innenseitenwandteil (62) bildet, und eine dritte Falte (28), die dazu angeordnet ist, das distale Ende (64) der Seitenlasche zwischen dem Innen(62)- und dem Außen(64)-Seitenwandteil zu positionieren, enthalten, wobei zwischen der dritten Falte (28) und dem Hauptwandteil (2a) eine Ausnehmung (34) definiert ist und der zweite Wandabschnitt (4) zweite Laschenabschnitte umfasst, die jeweils zur Bildung von Eingriffsgliedern gefaltet sind, welche zur Aufnahme in den entsprechenden Ausnehmungen (34) des ersten Wandabschnitts (2) ausgebildet und so angeordnet sind, dass sie in Eingriff gelangen, wenn der zweite Wandabschnitt (4) in den ersten Wandabschnitt (2) eingeführt ist, um den ersten und den zweiten Wandabschnitt (2, 4) zusammenzuhalten, wobei der erste und der zweite Laschenabschnitt integral mit dem ersten bzw. zweiten Wandabschnitt (2, 4) sind und aus dem gleichen gefalteten flächigen Material gebildet sind, wobei der erste und der zweite Wandabschnitt (2, 4) so gefaltet sind, dass, wenn der zweite Wandabschnitt (4) in dem ersten Wandabschnitt (2) aufgenommen ist, keiner der Außenränder des ersten oder zweiten Wandabschnitts (2, 4) außen freiliegt.

2. Platte nach Anspruch 1, wobei der zweite Wandabschnitt (4) einen Hauptwandabschnitt (4a) enthält und die zweiten Laschenabschnitte jeweils eine erste Falte (18), die einen senkrecht zu dem Hauptwandabschnitt (4a) ausgerichteten Seitenwandteil (66) bildet, und eine zweite Falte (20), die dazu angeordnet ist, das distale Ende (30) der Lasche im Wesentlichen neben und parallel zu dem Seitenwandabschnitt (66) zu positionieren, um das Eingriffsglied zu definieren, enthalten.

3. Platte nach einem vorhergehenden Anspruch, wobei der erste und der zweite Wandabschnitt (2, 4) so ausgebildet sind, das sie zwischen sich einen Hohlraum definieren.

4. Platte nach einem vorhergehenden Anspruch, ferner umfassend ein zwischen dem ersten und dem zweiten Wandabschnitt (2, 4) angeordnetes schall- und/oder wärmeisolierendes Material.

5. Platte nach einem vorhergehenden Anspruch, wobei die Platte eine strukturelle und/oder isolierende Platte zur Verwendung in einem HVAC-System ist.

6. Aus mehreren Platten nach einem vorhergehenden Anspruch gebildetes Gehäuse.

7. Aus mehreren Platten nach einem vorhergehenden Anspruch gebildete Kammer oder Leitung.

## Revendications

1. Panneau comprenant :
une première section de paroi (2) ; et
une deuxième section de paroi (4) configurée pour être reçue au moins en partie à l'intérieur de la première section de paroi (2), la première section de paroi (2) et la deuxième section de paroi (4) étant chacune formées d'un matériau en feuille plié ;
**caractérisé en ce que** :
la première section de paroi (2) comprend une portion de paroi principale (2a) et des premières sections de languettes (52) comportant chacune un premier pli (24) formant une portion de paroi latérale extérieure (60) orientée perpendiculairement à la section de paroi principale (2a), un deuxième pli (2b) formant une portion de paroi latérale intérieure (62) orientée de manière adjacente et parallèle à la portion de paroi latérale extérieure (60), et un troisième pli (28) prévu pour positionner l'extrémité distale (64) de la languette latérale entre les portions de paroi latérales intérieure (62) et extérieure (64), un renfoncement (34) étant défini entre le troisième pli (28) et la portion de paroi principale (2a), et la deuxième section de paroi (4) comprend des deuxièmes sections de languettes qui sont chacune pliées pour former des organes d'accrochage configurés pour être reçus à l'intérieur des renfoncements correspondants (34) de la première section de paroi (2), disposés de manière à venir en prise lorsque la deuxième section de paroi (4) est insérée dans la première section de paroi (2) de manière à retenir la première et la deuxième section de paroi (2, 4) ensemble, les première et deuxième sections de languettes étant intégrées à la première et à la deuxième section de paroi (2, 4), respectivement, et étant formées du même matériau en feuille plié, la première et la deuxième section de paroi (2, 4) étant pliées de telle sorte que lorsque la deuxième section de paroi (4) est reçue à l'intérieur de la première section de paroi (2), aucun des bords extérieurs de la première ou de la deuxième section de paroi (2, 4) ne soit exposé à l'extérieur.

2. Panneau selon la revendication 1, dans lequel la deuxième section de paroi (4) comporte une portion de paroi principale (4a) et les deuxièmes sections de languettes comportent chacune un premier pli (18) formant une portion de paroi latérale (66) orientée perpendiculairement à la section de paroi principale (4a), un deuxième pli (20) étant prévu pour positionner l'extrémité distale (30) de la languette de manière sensiblement adjacente et parallèle à la section de paroi latérale (66) pour définir l'organe d'accrochage.

3. Panneau selon l'une quelconque des revendications précédentes, dans lequel la première et la deuxième section de paroi (2, 4) sont configurées de manière à définir une cavité entre elles.

4. Panneau selon l'une quelconque des revendications précédentes, comprenant en outre un matériau d'isolation acoustique et/ou thermique interposé entre la première et la deuxième section de paroi (2, 4).

5. Panneau selon l'une quelconque des revendications précédentes, dans lequel le panneau est un panneau structurel et/ou d'isolation pour l'utilisation dans un système HVAC.

6. Enceinte formée d'une pluralité de panneaux selon l'une quelconque des revendications précédentes.

7. Plénum ou conduit formé d'une pluralité de panneaux selon l'une quelconque des revendications précédentes.
